# EUROPEAN PATENT APPLICATION

(11) **EP 1 503 527 A2**
(43) Date of publication of application: **02.02.2005**
(21) Application number: 04003514.9
(22) Date of filing: 17.02.2004
(51) Int. Cl.: H04B 10/16, H04L 12/42

(54) **Optical/electrical converting device and method**

(30) Priority: 30.07.2003 JP 2003283003
(71) Applicant: MATSUSHITA ELECTRIC INDUSTRIAL CO., LTD., Kadoma-shi, Osaka 571-8501 (JP)
(72) Inventor: Akita, Takashi, Osaka-shi, Osaka-fu 532-0022 (JP); Katta, Noboru, Itami-shi, Hyogo-ken 664-0017 (JP); Sakai, Takahisa, Amagasaki-shi, Hyogo-ken 661-0953 (JP); Mizuguchi, Yuji, Hirakata-shi, Osaka-fu 573-0165 (JP); Kawada, Hirotsugu, Osaka-shi, Osaka-fu 543-0043 (JP); Umei, Toshitomo, Settsu-shi, Osaka-fu 566-0033 (JP); Takahira, Yutaka, Neyagawa-shi, Osaka-fu 572-0083 (JP)
(74) Representative: Pautex Schneider, Nicole

(57) **Abstract**

If a master data transmission apparatus is included in an optical data transmission system, a clock recovered by a first clock recovery unit (91) based on an optical signal received from the optical data transmission system is selected by a clock selecting unit (93). If the master data transmission apparatus is included in an electrical data transmission system, a clock recovered by a second clock recovery unit (92) based on a lock signal received from the electrical data transmission system is selected by the clock selecting unit (93). A mapping unit (74), a digital filter (75), and a D/A converting unit (76) perform processing in accordance with the clock selected by the clock selecting unit (93).

## Description

### BACKGROUND OF THE INVENTION

### Field of the Invention

The present invention relates to optical/electrical converting devices and methods for optical/electrical signal conversion. More particularly, the present invention relates to an optical/electrical converting device for constructing a unified system by connecting a system in which data transmission is performed by optical signals and a system in which data transmission is performed by electrical signals, and an optical/electrical converting method performed by the device.

### Description of the Background Art

In recent years, a network for performing a fast communication of large volumes of information (digitalized video and/or audio data, or computer data, for example) between a plurality of devices connected thereto, such as audiovisual devices, navigation devices, and information terminal devices, is being studied vigorously. In the auto industry, there already exists practical implementations of on-vehicle networks for use in digital data transmission. Such an on-vehicle network adopts a ring topology as its physical topology. Specifically, a plurality of nodes are connected in a ring topology forming a unidirectional ring-type LAN for which interconnects audio devices, navigation devices, information terminal devices, and the like in a unified manner. One example of an information communication protocol used in a ring-type LAN is MOST (Media Oriented Systems Transport). The data on a MOST network is transmitted on a frame-by-frame basis, such that frames are transmitted sequentially from node to node in one direction.

In the case of a ring-type LAN provided inside an automobile, for example, radiation noise from the LAN may cause malfunctioning of other electronic devices mounted in the automobile. On the other hand, radiation noise from such other devices should not hinder proper transmission. Therefore, in a conventional ring-type LAN which employs MOST, the nodes are typically interconnected via fiber-optic cables for optical communications so as to improve noise immunity while preventing electromagnetic waves from being generated. However, inexpensive cables, such as twisted pair cables or coaxial cables, may also be used to perform data communication utilizing electrical signals; there have been implementations of this technique which realize a fast data transmission rate exceeding 20 Mbps while reducing radiation noise and improving noise immunity. This technique is disclosed, for example, in International Publication WO 02/30079.

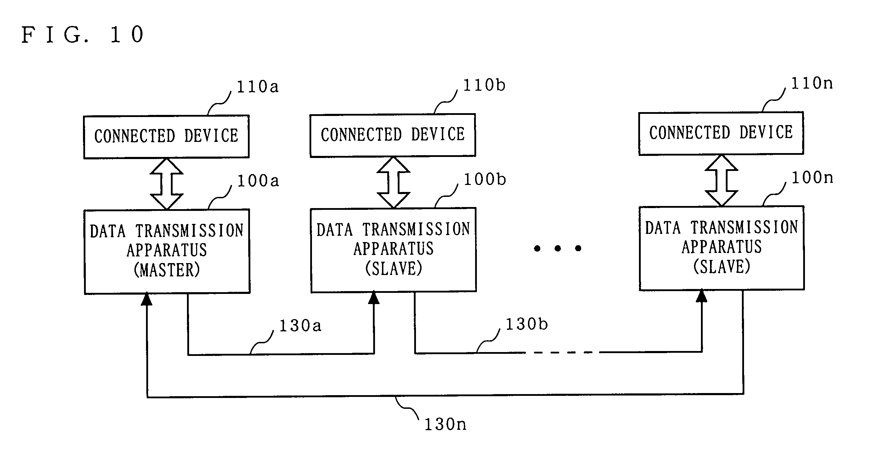

With reference to FIG. 10, a conventional data transmission system using a ring-type network will be described. In FIG. 10, the conventional data transmission system is composed of a plurality of stages of data transmission apparatuses 100a to 100n (i.e., nodes) performing data transmission/reception. These data transmission apparatuses 100a to 100n are connected to each other in a ring topology via transmission paths 130a to 130n. Also, devices 110a to 110n performing exchange of reception and transmission data are connected to the respective data transmission apparatuses 100a to 100n. As a typical hardware configuration, the data transmission apparatuses 100a to 100n are united with the respective devices 110a to 110n.

The data transmission apparatuses 100a to 100n have the same structure, and each data transmission apparatus includes a processing unit for processing a communication protocol of the ring-type network, a transmitting unit, and a receiving unit (these units are not shown). For example, the transmitting unit provided in the data transmission apparatus 100a outputs data, via the transmission path 130a, to the receiving unit provided in the data transmission apparatus 100b. Also, the receiving unit provided in the data transmission apparatus 100a receives, via the transmission path 130n, data from the transmitting unit provided in the data transmission apparatus 100n.

In the case of the MOST-based optical data transmission system performing data transmission/reception by an optical signal, each of the data transmission apparatuses 100a to 100n is composed of a controller (data link layer) for transmitting/receiving data, which is exchanged between the connected devices 110a to 110n, by a bi-phase encoded binary electrical digital signal, and a fiber optical transceiver (FOT) (physical layer) for converting the binary electrical digital signal into a binary optical digital signal, and transmitting/receiving the binary optical digital signal to/from other data transmission apparatuses. In each data link layer, establishment of synchronization with a clock generated by the data transmission apparatus 100a, which is a master in the system, is performed as an initialization process. In each physical layer, no initialization is required.

On the other hand, in the case of the MOST-based electrical data transmission system performing data transmission/reception by an electrical signal, each of the data transmission apparatuses 100a to 100n is composed of a controller (data link layer) for transmitting/receiving data, which is exchanged between the connected devices 110a to 110n, by a bi-phase encoded binary electrical digital signal, and a transmitting/receiving unit (physical layer) for converting the binary electrical digital signal into a multi-level electrical analog signal, and transmitting/receiving the multi-level electrical analog signal to/from other data transmission apparatuses. Thus, in this electrical data transmission system, establishment of synchronization with a clock generated by the data transmission apparatus 100a, which is a master in the system, and setting of evaluation levels used as a reference for data evaluation of the multi-level electrical analog signal are performed also in each physical layer as an initialization process.

As described above, the ring-type network contains the optical data transmission system and the electrical data transmission system. In general, these two systems are separately constructed. In the future, however, there exists a possibility that these two systems are connected to each other as a single network. In this case, these two systems can be connected to each other utilizing a conventional technique for converting a binary optical digital signal into a multi-level electrical analog signal and vice versa. This technique is disclosed, for example, in International Publication WO 02/30076, International Publication WO 02/30075, Japanese Patent Laid-Open Publication No. 2002-152142, Japanese Patent Laid-Open Publication No.2000-151516, and Japanese Patent Laid-Open Publication No.57-37941.

However, the above conventional technique is a commonly-used technique for converting a binary optical digital signal into a multi-level electrical analog signal and vice versa, and is not assumed to be applied to a ring-type network used in MOST. Consequently, if an apparatus utilizing the above conventional technique is used for connecting the optical data transmission system and the electrical data transmission system, the above two systems cannot perform a proper initialization process, whereby data transmission is impossible. Thus, in order to realize data transmission by connecting the optical data transmission system and the electrical data transmission system, it is necessary to develop an optical/ electrical converting device having a new structure.

### SUMMARY OF THE INVENTION

Therefore, an object of the present invention is to provide an optical/electrical converting device and an optical/electrical converting method, which is used for connecting an optical data transmission system and an electrical data transmission system, allowing conversion between a binary optical digital signal and a multi-level electrical analog signal, and execution of a proper initialization process in each system.

The present invention is directed to an optical/electrical converting device for connecting an optical data transmission system, which is composed of apparatuses performing data communication by an optical signal, and an electrical data transmission system, which is composed of apparatuses performing data communication by an electrical signal, and performing data communication between the systems. In order to attain the above object, the optical/electrical converting device of the present invention comprises a clock supplying unit, an electrical signal transmitting unit, and an electrical signal transmitting unit.

The clock supplying unit supplies a clock synchronized with a reference clock which is held by a master apparatus included in either system. The electrical signal transmitting unit inputs a binary optical signal from the optical data transmission system, converts the optical signal into a multi-level electrical analog signal synchronized with the clock supplied from the clock supplying unit, and outputs the electrical signal to the electrical data transmission system. The electrical signal receiving unit inputs a multi-level electrical analog signal from the electrical data transmission system, converts the electrical signal into a binary optical signal synchronized with the clock supplied from the clock supplying unit, and outputs the optical signal to the optical data transmission system.

The clock supplying unit may be constructed in various manners. Typically, the clock supplying unit includes a first clock recovery unit, a second clock recovery unit, and a clock selecting unit. In this case, the first clock recovery unit recovers a clock based on an optical signal input from the optical data transmission system. The second clock recovery unit recovers a clock based on an electrical signal input from the electrical data transmission system. The clock selecting unit selects a clock recovered by the first clock recovery unit if the master apparatus generating a reference clock is included in the optical data transmission system, and selects a clock recovered by the second clock recovery unit if the master apparatus generating a reference clock is included in the electrical data transmission system. In this case, the electrical signal transmitting unit converts the optical signal input from the optical data transmission system into an electrical signal synchronized with the clock selected by the clock selecting unit.

Alternatively, in the above case, the electrical signal transmitting unit may convert the optical signal input from the optical data transmission system into an electrical signal, and replace a clock recovered by the first clock recovery unit with a clock selected by the clock selecting unit while maintaining synchronization.

Also, the clock supplying unit may include a clock recovery unit and a clock selecting unit. The clock recovery unit recovers a clock based on an electrical signal input from the electrical data transmission system. The clock selecting unit selects a clock input from an apparatus, whose clock synchronization is already established, included in the optical data transmission system, if the master apparatus generating a reference clock is included in the optical data transmission system, and selects a clock recovered by the clock recovery unit if the master apparatus generating a reference clock is included in the electrical data transmission system. Also in this case, the electrical signal transmitting unit converts an optical signal input from the optical data transmission system into an electrical signal synchronized with a clock selected by the clock selecting unit.

Furthermore, the clock supplying unit may include a clock recovery unit, a clock generating unit, and a clock generating unit. In this case, the clock recovery unit recovers a clock based on an electrical signal input from the electrical data transmission system. The clock generating unit generates a reference clock used for locking slave apparatuses to the master apparatus. The clock selecting unit selects a clock generated by the clock generating unit if the master apparatus, which causes the slave apparatuses to be locked by the reference clock, is included in the optical data transmission system, and selects a clock recovered by the clock recovery unit if the master apparatus generating a reference clock is included in the electrical data transmission system. Also in this case, the electrical signal transmitting unit converts an optical signal input from the optical data transmission system into an electrical signal synchronized with a clock selected by the clock selecting unit.

Preferably, in order to cause the electrical data transmission system to execute an initialization process, the electrical signal receiving unit performs the following: sending an electrical signal input from the electrical data transmission system to the electrical signal transmitting unit until completion of initialization of the apparatuses composing the electrical data transmission system; and converting an electrical signal input from the electrical data transmission system into an optical signal synchronized with a clock selected by the clock selecting unit, and outputting the optical signal to the optical data transmission system after completion of the initialization of the apparatuses composing the electrical data transmission system.

The present invention is also directed to an optical/electrical converting method for connecting an optical data transmission system, which is composed of apparatuses performing data communication by an optical signal, and an electrical data transmission system, which is composed of apparatuses performing data communication by an electrical signal, and performing data communication between the systems. In order to attain the above object, the optical/electrical converting method of the present invention comprises the steps for executing the following steps.

If a master apparatus generating a reference clock is included in the optical data transmission system, a clock is recovered based on an optical signal input from the optical data transmission system. If a master apparatus generating a reference clock is included in the electrical data transmission system, a clock is recovered based on an electrical signal input from the electrical data transmission system. A binary optical digital signal input from the optical data transmission system is converted into a multi-level electrical analog signal synchronized with the recovered clock, and output to the electrical data transmission system. A multi-level electrical analog signal input from the electrical data transmission system is caused to synchronize with the recovered clock, and output to the electrical data transmission system until completion of initialization of the apparatuses composing the electrical data transmission system. After completion of the initialization of the apparatuses composing the electrical data transmission system, a multi-level electrical analog signal input from the electrical data transmission system is converted into a binary optical digital signal synchronized with the recovered clock, and output to the optical data transmission system.

As such, according to the present invention, data transmission is performed using a clock synchronized with an optical signal received from the optical data transmission system if the master apparatus (master data transmission apparatus) is included in the optical data transmission system. On the other hand, data transmission is performed using a clock synchronized with a lock signal received from the electrical data transmission system if the master apparatus is included in the electrical data transmission system. Thus, it is possible to realize a network connection between the optical data transmission system and the electrical data transmission system, which allows conversion between a binary optical digital signal and a multi-level electrical analog signal, and execution of a proper initialization process in each system.

Also, the present invention allows a clock of an electrical signal to be replaced with a different clock with ease. Thus, the present invention is effective in a case where it is desired to change a clock frequency, or in a case where it is desired to perform synchronization with an accurate clock containing no noise component such as jitter while maintaining the same clock frequency. Also, according to the present invention, a clock is directly supplied from an apparatus, whose clock synchronization is already established, of the optical data transmission system, whereby the first clock recovery unit is not required. As a result, the structure of the optical/electrical converting device can be simplified. Furthermore, according to the present invention, a clock is directly supplied to the master apparatus of the optical data transmission system, whereby the master apparatus does not need a component (for example, an oscillator) for clock generation. Thus, the structure of the master apparatus can be simplified.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 is a block diagram showing a general structure of a MOST-based electrical data transmission system;
FIG. 2 is a time-series sequence diagram showing initialization of each data transmission apparatus included in the electrical data transmission system shown in FIG. 1;
FIG. 3 is a block diagram showing a general structure of a MOST-based optical data transmission system;
FIG. 4 is a time-series sequence diagram showing initialization of each data transmission apparatus included in the optical data transmission system;
FIG. 5 is an illustration showing an exemplary system environment to which an optical/electrical converting device according to an embodiment of the present invention is applied;
FIG. 6 is a block diagram showing the structure of an optical/electrical converting device according to a first embodiment of the present invention;
FIG. 7 is a block diagram showing the structure of an optical/electrical converting device according to a second embodiment of the present invention;
FIG. 8 is a block diagram showing the structure of an optical/electrical converting device according to a third embodiment of the present invention;
FIG. 9 is a block diagram showing the structure of an optical/electrical converting device according to a fourth embodiment of the present invention; and
FIG. 10 is an illustration showing a conventional data transmission system utilizing a ring-type network.

### DESCRIPTION OF THE PREFERRED EMBODIMENTS

Before describing embodiments of an optical/electrical converting device and method of the present invention, initialization processes performed in a MOST-based optical data transmission system and a MOST-based electrical data transmission system will be described first.

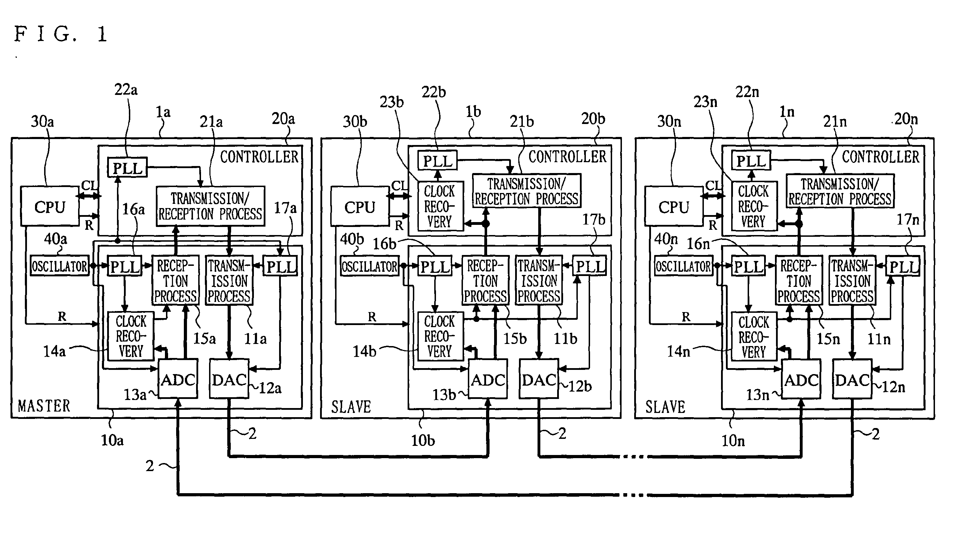

FIG. 1 is a block diagram showing a general structure of the MOST-based electrical data transmission system. In FIG. 1, this electrical data transmission system includes a plurality of stages of data transmission apparatuses 1a to 1n. The data transmission apparatuses 1a to 1n are connected to each other in a ring topology via a transmission path 2 (a coaxial cable or a twisted pair cable, for example). A device (not shown) is connected to each of the data transmission apparatuses 1a to 1n. Each connected device performs processing based on data output from the data transmission apparatus to which it is connected, and outputs the processing results to the data transmission apparatus. The data transmission apparatus 1a is a master which transmits data based on its clock, and other data transmission apparatuses 1b to 1n are slaves which establish clock synchronization according to a signal received from the master. The data transmission apparatuses 1a to 1n have much the same structure, and therefore the structure of the master data transmission apparatus 1a and a flow of transmission/reception data therefrom/to will be described first as an example.

The data transmission apparatus 1a includes a transmitting/receiving unit (physical layer) 10a, a controller (data link layer) 20a, a CPU 30a, and an oscillator 40a. The transmitting/receiving unit 10a includes a transmission processing unit 11a, a DAC (D/A converter) 12a, an ADC (A/D converter) 13a, a clock recovery unit 14a, a reception processing unit 15a, and PLLs (Phase Locked Loop) 16a and 17a. Also, the controller 20a includes a transmission/reception processing unit 21a and a PLL 22a.

The data transmission apparatus 1a outputs data to the data transmission apparatus 1b via the transmission path 2, and receives data from the data transmission apparatus 1n. Data from the connected device, etc., connected to the data transmission apparatus 1a is processed by the transmission/reception processing unit 21a, and output as a binary digital data string. The transmission processing unit 11a combines a predetermined number of bits of data in the above digital data string to make a plurality of data symbols, and performs mapping, on the basis of a conversion table, and filtering for the data symbols. The digital signal processed by the transmission processing unit 11a is converted into an analog signal by the DAC 12a, and output to the transmission path 2. This analog signal is output as a waveform (multi-level electrical analog signal) having a predetermined cycle, which is converted from the above digital data string and is generated by mapping each of the above symbols to any one of the plurality of the signal levels. On the other hand, the ADC 13a receives an analog signal output from the data transmission apparatus 1n via the transmission path 2, and converts the received analog signal into a digital signal. The reception processing unit 15a decodes the digital signal, which is converted by the ADC 13a, into a plurality of data symbols by filtering and demapping, converts the data symbols into a binary digital data string, and outputs it to the transmission/reception processing unit 21a.

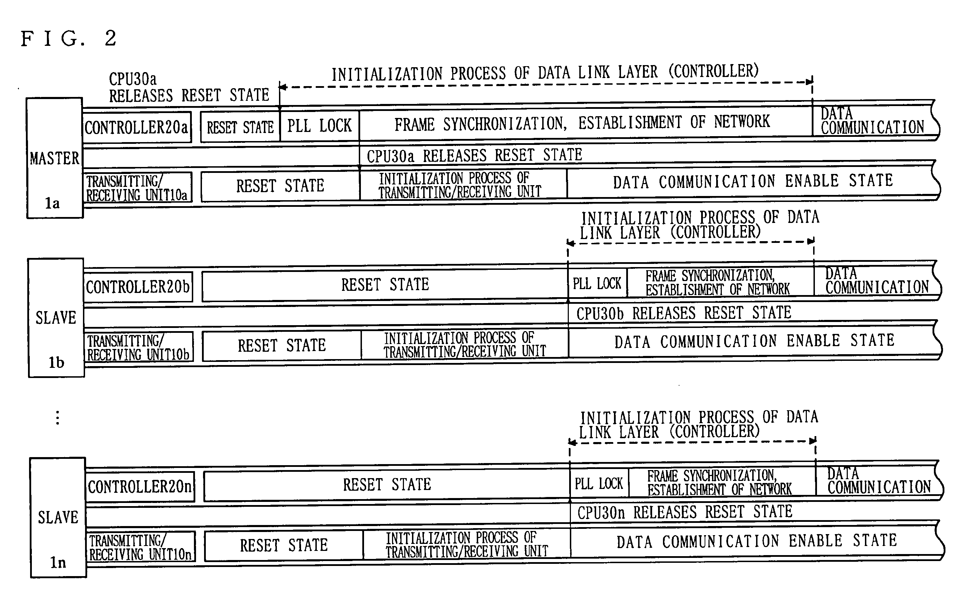

In the electrical data transmission system having the above-described structure, in order to define a mechanical connection, an initialization process is performed for the controllers 20a to 20n, which are protocol data link layers, and the transmitting/receiving units 10a to 10n, which are protocol physical layers, and establishment of clock synchronization of the data transmission apparatuses 1a to 1n and setting of evaluation levels used as a reference for data evaluation are performed during the initialization operation. Hereinafter, with reference to FIG. 2, the initialization process in the above electrical data transmission system will be described.

First, the CPU 30a of the data transmission apparatus 1a is reset when power is turned on, and outputs, to the controller 20a, a reset signal R for releasing a reset state of the controller 20a. Then, the CPU 30a outputs, to the controller 20a, a control signal CL for resetting the controller 20a to its default setting. The controller 20a releases its reset state in response to reception of the reset signal R, and resets itself to its default setting in response to reception of the control signal CL. Then, the controller 20a starts an initialization process of the data link layer, and provides notification to the CPU 30a if the oscillator 40a and the PLL 22a are locked during the above initialization process. If the CPU 30a receives the notification that the PLL 22a is locked, the CPU 30a outputs, to the transmitting/receiving unit 10a, a reset signal R for releasing a reset state.

The transmitting/receiving unit 10a releases its reset state in response to reception of the reset signal R, and starts an initialization of the physical layer. In this initialization process, the transmitting/receiving unit 10b to 10n, which are other physical layers, are also initialized. Specifically, the transmitting/receiving unit 10a locks the PLL 17a by a clock of the oscillator 40a, and sends a lock signal based on the clock to the data transmission apparatus 1b. The transmitting/receiving unit 10b of the slave data transmission apparatus 1b performs clock recovery, by a PLL 16b and a clock recovery unit 14b, using the received lock signal, establishes clock synchronization by locking a PLL 17b, and sends, to the data transmission apparatus 1c (not shown) connected to a next stage, a lock signal based on the recovered clock. The transmission of the lock signal is sequentially performed, and the transmitting/receiving unit 10n of the slave data transmission apparatus 1n also performs clock recovery, by a PLL 16n and a clock recovery unit 14n, using the lock signal received from a data transmission apparatus 1m (not shown) connected to a previous stage, establishes clock synchronization by locking a PLL 17n, and sends a lock signal based on the recovered clock to the master data transmission apparatus 1a connected to a next stage. Then, the transmitting/receiving unit 10a of the master data transmission apparatus 1a performs clock recovery by the PLL 16a and the clock recovery unit 14a using the received lock signal, whereby clock synchronization of the entire data transmission system is established.

After clock synchronization of the entire electrical data transmission system is established, the transmitting/receiving unit 10a of the master data transmission apparatus 1a sends, to the data transmission apparatus 1b, a training signal for setting evaluation levels used as a reference for data evaluation. The transmitting/receiving unit 10b of the slave data transmission apparatus 1b sends its training signal to the data transmission apparatus 1c while setting evaluation levels used thereby for data evaluation with the data transmission apparatus 1a. The transmission of the training signal is sequentially performed, and the transmitting/receiving unit 10n of the slave data transmission apparatus 1n also sends its training signal to the data transmission apparatus 1a while setting evaluation levels used thereby for data evaluation with the data transmission apparatus 1b using a training signal received from the data transmission apparatus 1m connected to a previous stage. Then, the transmitting/receiving unit 10a of the master data transmission apparatus 1a sets evaluation levels used thereby for data evaluation with the data transmission apparatus 1n using the received training signal, whereby evaluation levels of the entire electrical data transmission system are set. As a result, the transmitting/receiving units 10a to 10n go into a state where they can perform data communication.

On the other hand, the controller 20a waits for a network of the entire electrical data transmission system to be established during the above initialization process. For example, the controller 20a sends a network establishment verification signal via the transmitting/receiving unit 10a of the electrical data transmission system, and determines that the network is established if the controller 20a receives the network establishment verification signal more than once via other data transmission apparatuses 1b to 1n and the transmitting/receiving unit 10a. That is, after the transmitting/receiving units 10a to 10n of the electrical data transmission system go into a state where they can perform data communication, the controller 20a can determine whether or not the network is established. After the network is established, the controller 20a ends the process for initializing the data link layer, and outputs a control signal CL indicating the end of the initialization process to the CPU 30a.

The CPU 30a waits for the initialization process of the controller 20a to be ended, and determines that the initialization process is ended in response to reception of the control signal CL indicating the end of the initialization process. Then, the CPU 30a outputs, to the controller 20a, a control signal CL instructing start of data communication. The controller 20a receives the control signal CL instructing start of data communication, and starts data communication with other data communication apparatuses, whereby the initialization process of the master data transmission apparatus 1a is ended. Note that initialization processes of the controllers 20b to 20n of the slave data transmission apparatuses 1b to 1n are performed when the respective CPUs 30b to 30n release reset states of the controllers 20b to 20n after initialization processes of the respective transmitting/receiving units 10b to 10n are ended.

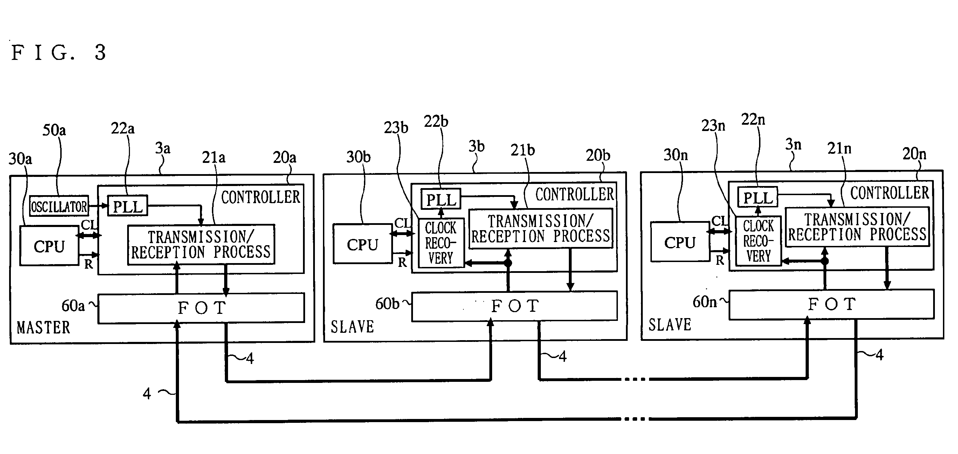

FIG. 3 is a block diagram showing a general structure of the MOST-based optical data transmission system. In FIG. 3, this optical data transmission system includes a plurality of stages of data transmission apparatuses 3a to 3n. The data transmission apparatuses 3a to 3n are connected to each other in a ring topology via a transmission path 4 (optical fiber cable). A device (not shown) is connected to each of the data transmission apparatuses 3a to 3n. Each connected device performs processing based on data output from the data transmission apparatus to which it is connected, and outputs the processing results to the data transmission apparatus. The data transmission apparatus 3a is a master which transmits data based on its clock, and other data transmission apparatuses 3b to 3n are slaves which establish clock synchronization with a signal received from the master. The data transmission apparatuses 3a to 3n have much the same structure, and therefore the structure of the master data transmission apparatus 3a and a flow of transmission/reception data therefrom/to will be described first as an example.

The data transmission apparatus 3a includes a FOT (physical layer) 60a, a controller (link layer) 20a, a CPU 30a, and an oscillator 50a. As described above, the controller 20a includes a transmission/reception processing unit 21a and a PLL 22a.

The data transmission apparatus 3a outputs data to the data transmission apparatus 3b via the FOT 60a and a transmission path 4, and receives data from the data transmission apparatus 3n. Data from a device, etc., connected to the data transmission apparatus 3a is processed by the transmission/reception processing unit 21a, and output to the transmission path 4 as a binary digital data string. On the other hand, a binary digital data string output from the data transmission apparatus 3n is received by the transmission/reception processing unit 21a via the transmission path 4 and the FOT 60a.

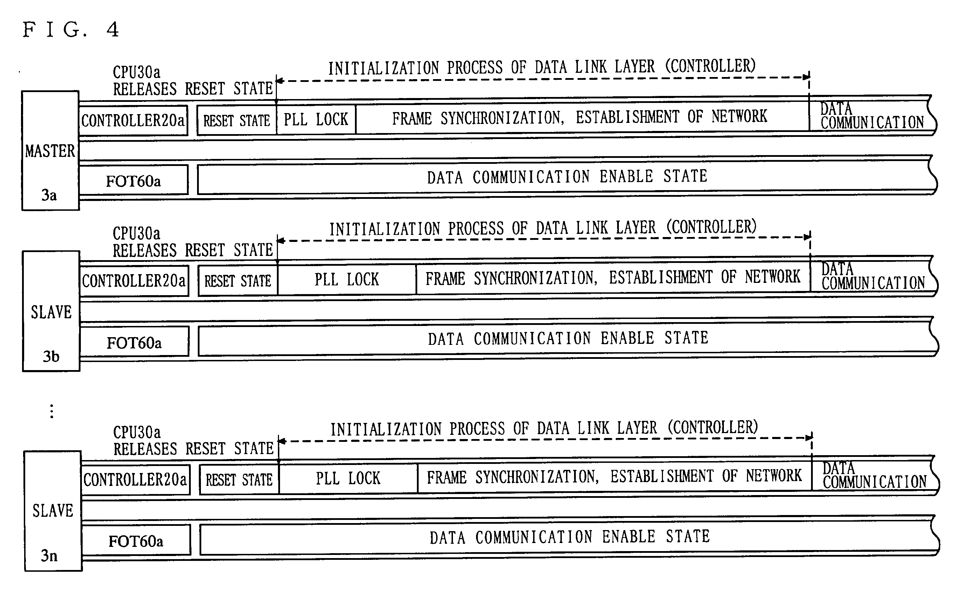

In the optical data transmission system having the above-described structure, in order to define a mechanical connection, an initialization process is performed for the controllers 20a to 20n, which are protocol data link layers, and establishment of clock synchronization of the data transmission apparatuses 3a to 3n is performed during the initialization operation. Hereinafter, with reference to FIG. 4, the initialization process in the above optical data transmission system will be described.

First, the CPU 30a of the data transmission apparatus 3a is reset when power is turned on, and outputs, to the controller 20a, a reset signal R for releasing a reset state of the controller 20a. Then, the CPU 30a outputs, to the controller 20a, a control signal CL for resetting the controller 20a to its default setting. The controller 20 a releases its reset state in response to reception of the reset signal R, and resets itself to its default setting in response to reception of the control signal CL. The transmission/reception processing unit 21a causes the oscillator 50a and the PLL 22a to be locked during the initialization process, and sends a signal based on a clock of the oscillator 50a. The sent signal is converted into an optical signal by the FOT 60a, and transmitted to the data transmission apparatus 3b. A transmission/reception processing unit 21b of the slave data transmission apparatus 3b performs clock recovery by a PLL 22b and a clock recovery unit 23b using the received signal, which is converted into an electric signal by a FOT 60b, establishes clock synchronization by locking the PLL 22b, and sends a signal based on the recovered clock to the data transmission apparatus 3c (not shown) connected to a next stage. The transmission of the clock signal is sequentially performed, and the transmission/reception processing unit 21n of the slave data transmission apparatus 3n performs clock recovery by a PLL 22n and a clock recovery unit 23n using a signal received from a data transmission apparatus 3m (not shown) connected to a previous stage, establishes clock synchronization by locking the PLL 22n, and sends a signal based on the recovered clock to the master data transmission apparatus 3a connected to a next stage.

When the signal from the data transmission apparatus 3n is received, the controller 20a of the master data transmission apparatus 3a determines that the clock synchronization of the entire data transmission system is established, and ends the initialization process of the data link layer. At this time, the controller 20a outputs a control signal CL indicating the end of the initialization process to the CPU 30a. The control signal CL indicating the end of the initialization process of the controller 20a is received, the CPU 30a determines that the initialization process is ended. Then, the CPU 30a outputs, to the controller 20a, a control signal CL instructing start of data communication. The controller 20a receives the control signal CL instructing start of data communication, and starts data communication with other data communication apparatuses.

Next, an optical/electrical converting device of the present invention will be described.

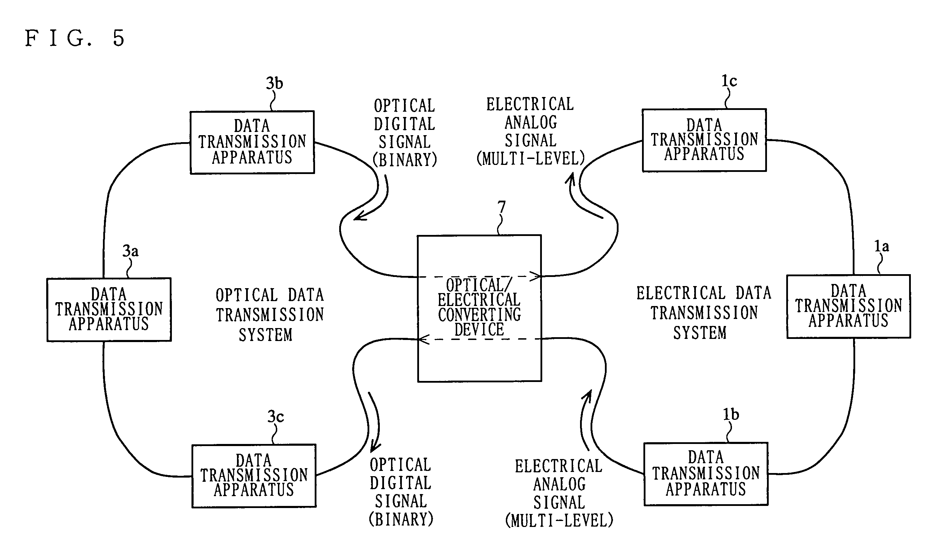

FIG. 5 is an illustration showing an exemplary system environment to which an optical/electrical converting device 7 according to an embodiment of the present invention is applied. As shown in FIG. 5, the optical/electrical converting device 7 of the present invention, which is inserted between the optical data transmission system and the electrical data transmission system, is a device for connecting the above two systems as one ring-type network system, and performing data transmission using an optical signal and an electrical signal at the same time in this system. FIG. 5 shows an exemplary structure in which the optical data transmission system is composed of the data transmission apparatuses 3a to 3c, and the electrical data transmission system is composed of the data transmission apparatuses 1a to 1c.

The optical/electrical converting device 7 realizes the following functions: inputting a binary optical digital signal from the optical data transmission system and outputting a multi-level electrical analog signal into the electrical data transmission system; inputting a multi-level electrical analog signal from the electrical data transmission system and outputting a binary optical digital signal into the optical data transmission system; and causing the optical data transmission system and the electrical data transmission system to execute an optimized initialization process. The optical/electrical converting device 7 of the present invention realizes these functions utilizing the following structure and control.

### (first embodiment)

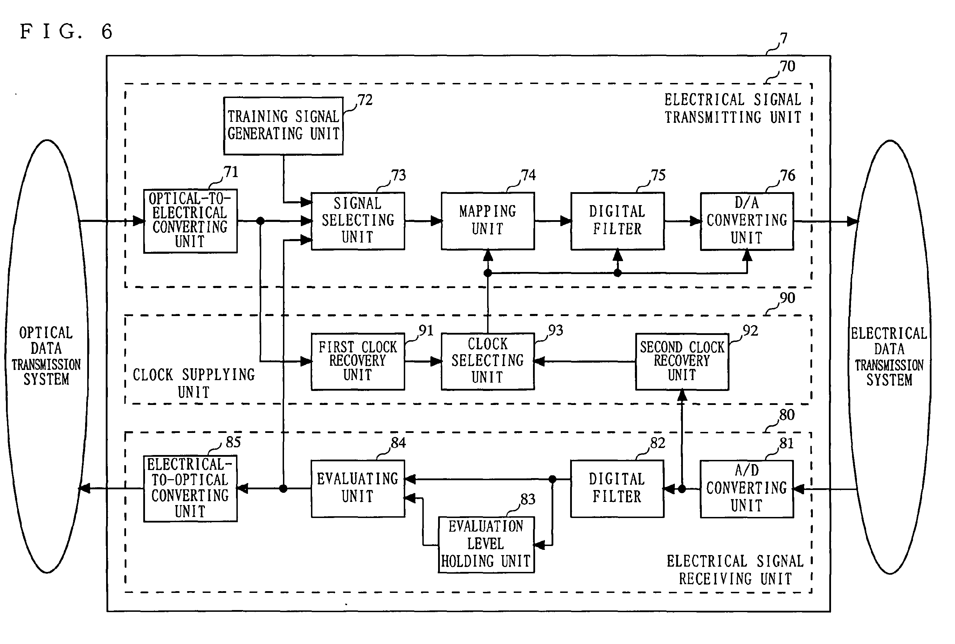

FIG. 6 is a block diagram showing the structure of the optical/electrical converting device 7 according to a first embodiment of the present invention. In FIG. 6, the optical/electrical converting device 7 includes an electrical signal transmitting unit 70, an electrical signal receiving unit 80, and a clock supplying unit 90. The electrical signal transmitting unit 70 includes an optical-to-electrical converting unit 71, a training signal generating unit 72, a signal selecting unit 73, a mapping unit 74, a digital filter 75, and a D/A converting unit 76. The electrical signal receiving unit 80 includes an A/D converting unit 81, a digital filter 82, an evaluation level holding unit 83, an evaluating unit 84, and an electrical-to-optical converting unit 85. The clock supplying unit 90 includes a first clock recovery unit 91, a second clock recovery unit 92, and a clock selecting unit 93.

The optical-to-electrical converting unit 71 receives a digital data string of an optical signal, from the data transmission apparatus 3b of the optical data transmission system, and converts it into an electrical signal. The first clock recovery unit 91 recovers a clock using the electrical signal converted by the optical-to-electrical converting unit 71. The training signal generating unit 72 generates a training signal used in the initialization process. The signal selecting unit 73 selects from among outputs from the optical-to-electrical converting unit 71, the training signal generating unit 72, and the evaluating unit 84, and supplies it to the mapping unit 74. The mapping unit 74 combines a predetermined number of bits in the digital data string, which is supplied from the signal selecting unit 73, to make data symbols, and generates a signal in which each symbol is mapped to a predetermined signal level. For the signal generated by the mapping unit 74, the digital filter 75 performs a process for compensating signal levels between symbols at predetermined intervals. The D/A converting unit 76 converts the digital signal processed by the digital filter 75 into an analog signal. The processes by the mapping unit 74, the digital filter 75, and the D/A converting unit 76 are performed in accordance with the clock output from the clock selecting unit 93.

The A/D converting unit 81 receives an analog electrical signal from the data transmission apparatus 1b of the electrical data transmission system, and converts it into a digital electrical signal. The second clock recovery unit 92 recovers a clock using the digital signal converted by the A/D converting unit 81. The digital filter 82 removes noise from the digital signal converted by the A/D converting unit 81. The evaluation level holding unit 83 extracts evaluation levels, which are used as a reference for data evaluation of a multi-level electrical analog signal, from the digital signal from which noise is removed, and holds the extracted evaluation levels. In accordance with the evaluation levels held by the evaluation level holding unit 83, the evaluating unit 84 evaluates (demapping) the digital signal processed by the digital filter 82, and generates a digital data string on the basis of the evaluation. The electrical-to-optical converting unit 85 converts the digital data string of an electrical signal by the evaluating unit 84, into an optical signal. The processes by the digital filter 82 and the evaluating unit 84 are basically performed in accordance with the clock output from the clock selecting unit 93. However, these processes may be fixedly performed in accordance with the clock recovered by the second clock recovery unit 92 or other clock (not shown).

The clock selecting unit 93 selects one clock recovered by either the first clock recovery unit 91 or the second clock recovery unit 92, and outputs it to the mapping unit 74, the digital filter 75, and the D/A converting unit 76.

The clock selected by the clock selecting unit 93 is previously set based on whether the master data transmission apparatus, which generates a reference clock, is included in the optical data transmission system or the electrical data transmission system. Also, the signal selecting unit 73 performs different switching operations based on whether the master data transmission apparatus, which generates a reference clock, is included in the optical data transmission system or the electrical data transmission system. Hereinafter, along with the operations of the clock selecting unit 93 and the signal selecting unit 73, an initialization process performed in the system in which the optical data transmission system and the electrical data transmission system are network-connected will be described.

### (1) a case where the master data transmission apparatus is included in the optical data transmission system

In this case, the clock selecting unit 93 is set so as to always output a clock recovered by the first clock recovery unit 91. Also, the signal selecting unit 73 is set so as to first supply an output from the optical-to-electrical converting unit 71 to the mapping unit 74.

In FIG. 5, for example, suppose that the initialization process is performed using the data transmission apparatus 3a of the optical data transmission system as a master. In this case, the data transmission apparatus 3a first resets itself to its default setting by causing the PLL to lock to a clock of a predetermined oscillator, which is built into the data transmission apparatus 3a, and sends an optical signal based on the clock to the data transmission apparatus 3b. The data transmission apparatus 3b establishes clock synchronization by locking the PLL to a clock recovered based on the optical signal received from the data transmission apparatus 3a, and sends an optical signal based on the clock to the optical/electrical converting device 7.

The optical/electrical converting device 7 causes the first clock recovery unit 91 to recover a clock in accordance with the optical signal received from the data transmission apparatus 3b (that is, the PLL is locked). The recovered clock is supplied to the mapping unit 74, the digital filter 75, and the D/A converting unit 76 via the clock selecting unit 93, and a lock signal synchronized with the clock is generated. As such, the optical/electrical converting device 7 functions as a master data transmission apparatus of the electrical data transmission system. The generated lock signal is sent to the data transmission apparatus 1c. The data transmission apparatus 1c establishes clock synchronization by locking the PLL to a clock recovered based on the lock signal received from the optical/electrical converting device 7, and sends a lock signal based on the clock to the data transmission apparatus 1a connected to a next stage. Likewise, the data transmission apparatuses 1a and 1b establish clock synchronization.

When it is verified that the lock signal is received from the data transmission apparatus 1b, the optical/electrical converting device 7 determines that clock synchronization of all data transmission apparatuses 1a to 1c in the electrical data transmission system is established. Then, the optical/electrical converting device 7 performs switching so that the signal selecting unit 73 supplies an output from the training signal generating unit 72 to the mapping unit 74, and sends a training signal, which is used for setting evaluation levels, to the data transmission apparatus 1c. Note that, at this point, no optical signal is output from the electrical-to-optical converting unit 85 to the optical data transmission system. The data transmission apparatus 1c sets evaluation levels based on the training signal received from the optical/electrical converting device 7, and sends a training signal to the data transmission apparatus 1a connected to a next stage. Likewise, the data transmission apparatuses 1a and 1b set evaluation levels based on a training signal.

When the training signal is received from the data transmission apparatus 1b, the optical/electrical converting device 7 holds the evaluation levels, which is derived from the training signal, in the evaluation level holding unit 83. As a result, the optical/electrical converting device 7 determines that setting of the evaluation levels of all data transmission apparatuses in the electrical data transmission system is completed. By the above process, the initialization process of the electrical data transmission system is completed.

After the initialization process of the electrical data transmission system is completed, the electrical-to-optical converting unit 85 converts the digital data string of an electrical signal, which is generated by the evaluating unit 84, into an optical signal, and outputs it to the optical data transmission system. At the same time, the optical/electrical converting device 7 performs switching so that the signal selecting unit 73 supplies an output from the optical-to-electrical converting unit 71 to the mapping unit 74. As a result, the electrical data transmission system and the optical data transmission system are connected via a data line.

When an optical signal is received from the optical/electrical converting device 7, the data transmission apparatus 3c of the optical data transmission system establishes clock synchronization by locking the PLL to a clock recovered based on the optical signal. Then, the data transmission apparatus 3c sends, to the data transmission apparatus 3a, an optical signal based on the recovered clock. By the above process, the initialization process of the optical data transmission system is completed. That is, the initialization process of the entire network composed of the optical data transmission system and the electrical data transmission system is completed.

### (2) a case where the master data transmission apparatus is included in the electrical data transmission system

In this case, the clock selecting unit 93 is set so as to output a clock recovered by the second clock recovery unit 92. Also, the signal selecting unit 73 is set so as to first supply an output from the evaluating unit 84 to the mapping unit 74.

In FIG. 5, for example, suppose that the initialization process is performed using the data transmission apparatus 1a of the electrical data transmission system as a master. In this case, the data transmission apparatus 1a first establishes clock synchronization by causing the PLL to lock to a clock of a predetermined oscillator, which is built into the data transmission apparatus 1a, and sends a lock signal based on the clock to the data transmission apparatus 1b connected to a next stage. The data transmission apparatus 1b establishes clock synchronization by causing the PLL to lock to a clock recovered based on the lock signal received from the data transmission apparatus 1a, and sends a lock signal based on the clock to the optical/electrical converting device 7 connected to a next stage. The optical/electrical converting device 7 causes the second clock recovery unit 92 to recover a clock in accordance with the lock signal received from the data transmission apparatus 1b (that is, the PLL is locked). The recovered clock is supplied to the mapping unit 74, the digital filter 75, and the D/A converting unit 76 via the clock selecting unit 93, and a lock signal synchronized with the clock is generated. The generated lock signal is sent to the data transmission apparatus 1c. As such, the optical/electrical converting device 7 functions as a slave data transmission apparatus of the electrical data transmission system. Note that, at this point, no optical signal is output from the electrical-to-optical converting unit 85 to the optical data transmission system.

The data transmission apparatus 1c establishes clock synchronization by causing the PLL to lock to a clock recovered based on the lock signal received from the optical/electrical converting unit 7, and sends a lock signal based on the clock to the data transmission apparatus 1a connected to a next stage. By the above process, clock synchronization of all data transmission apparatuses 1a to 1c in the electrical data transmission system is established.

Next, the data transmission apparatus 1a sends a training signal, which is used for setting evaluation levels, to the data transmission apparatus 1b. The data transmission apparatus 1b sets the evaluation levels based on the training signal received from the data transmission apparatus 1a, and sends a training signal to the optical/electrical converting device 7 connected to a next stage. When the training signal is received from the data transmission apparatus 1b, the optical/electrical converting device 7 holds the evaluation levels derived from the training signal in the evaluation level holding unit 83. Then, the optical/electrical converting device 7 performs switching so that the signal selecting unit 73 supplies an output from the training signal generating unit 72 to the mapping unit 74, and sends the training signal stored in training signal generating unit 72 to the data transmission apparatus 1c. The data transmission apparatus 1c sets the evaluation levels based on the training signal received from the optical/electrical converting device 7, and sends a training signal to the data transmission apparatus 1a connected to a next stage. As a result, the data transmission apparatus 1a determines that setting of the evaluation levels of all data transmission apparatuses in the electrical data transmission system is completed. By the above process, the initialization process of the electrical data transmission system is completed.

After the initialization process of the electrical data transmission system is completed, the electrical-to-optical converting unit 85 of the optical/electrical converting device 7 converts the digital data string of an electrical signal, which is generated by the evaluating unit 84, into an optical signal, and outputs it to the optical data transmission system. At the same time, the optical/electrical converting device 7 performs switching so that the signal selecting unit 73 supplies an output from the optical-to-electrical converting unit 71 to the mapping unit 74. As a result, the electrical data transmission system and the optical data transmission system are connected via a data line. Note that the optical/electrical converting device 7 may be notified by the master data transmission apparatus 1a that the initialization process of the electrical data transmission system is completed, or the optical/electrical converting device 7 may wait for a predetermined time to elapse after clock synchronization is established or evaluation levels are set for making determination on its own.

When the optical signal is received from the optical/electrical converting device 7, the data transmission apparatus 3c of the optical data transmission system establishes clock synchronization by causing the PLL to lock to a clock recovered based on the optical signal. Then, the data transmission apparatus 3c sends an optical signal based on the clock. Likewise, the clock synchronization of the data transmission apparatuses 3a and 3b is established. By the above process, the initialization process of the optical data transmission system is completed. That is, the initialization process of the entire network composed of the optical data transmission system and the electrical data transmission system is completed.

As such, according to the optical/electrical converting device of the first embodiment of the present invention, data transmission is performed using a clock synchronized with an optical signal received from the optical data transmission system in the case where the master data transmission apparatus is included in the optical data transmission system, and the data transmission is performed using a clock synchronized with a lock signal received from the electrical data transmission system in the case where the master data transmission apparatus is included in the electrical data transmission system. Thus, it is possible to realize a network connection between the optical data transmission system and the electrical data transmission system, which allows conversion between a binary optical digital signal and a multi-level electrical analog signal, and execution of a proper initialization process in each system.

### (second embodiment)

In the first embodiment, the decision as to whether the electrical signal transmitting unit 70 of the optical/electrical converting device 7 uses a clock recovered by the first clock recovery unit 91 or a clock recovered by the second clock recovery unit 92 is made in accordance with the system in which the master data transmission apparatus is included. However, according to the circumstances, there may be a case where it is desired to replace, in the electrical signal transmitting unit 70, a clock of an electrical signal to be transmitted with a different clock. Therefore, in a second embodiment, the optical/electrical converting device 7 enabling clock replacement will be described.

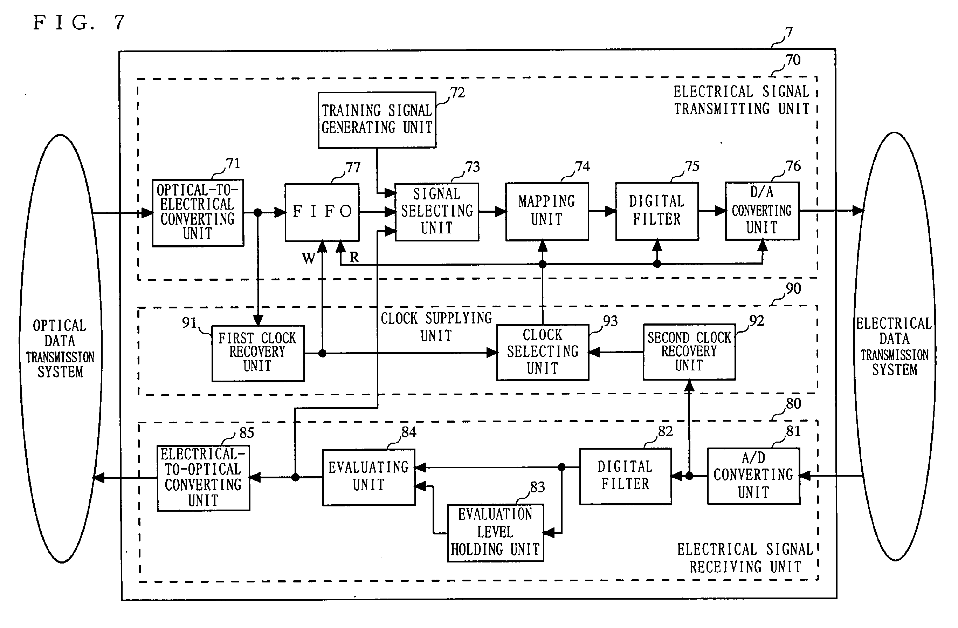

FIG. 7 is a block diagram showing the structure of the optical/electrical converting device 7 according to the second embodiment of the present invention. In FIG. 7, the optical/electrical converting device 7 includes the electrical signal transmitting unit 70, the electrical signal receiving unit 80, and the clock supplying unit 90. The electrical signal transmitting unit 70 includes the optical-to-electrical converting unit 71, the training signal generating unit 72, a FIFO 77, the signal selecting unit 73, the mapping unit 74, the digital filter 75, and the D/A converting unit 76. The structures of the electrical signal receiving unit 80 and the clock supplying unit 90 are identical to those described in the first embodiment.

As shown in FIG. 7, the optical/electrical converting device 7 according to the second embodiment differs from the first embodiment in that the FIFO 77 is further included. The FIFO 77 is a memory for writing an input signal with a predetermined write clock W, and reading the written signal with a predetermined read clock R. In this optical/electrical converting device 7, a clock recovered by the first clock recovery unit 91 is always used as a write clock W irrespective of which data transmission system includes the master data transmission apparatus. On the other hand, a clock output from the clock selecting unit 93 is used as a read clock R. Specif ically, clock replacement is performed using the FIFO 77 as follows.

In the optical/electrical converting device 7, the optical-to-electrical converting unit 71 converts an optical signal received from the data transmission apparatus 3b into an electrical signal. The first clock recovery unit 91 recovers a clock from the electrical signal converted by the optical-to-electrical converting unit 71. The recovered clock is supplied to the FIFO 77 and the clock selecting unit 93. The electrical signal converted by the optical-to-electrical converting unit 71 is written into the FIFO 77 at a timing of the clock CK1 recovered by the first clock recovery unit 91. The electrical signal written into the FIFO 77 is read at a timing of a clock CK2 output from the clock selecting unit 93, and output to the mapping unit 74. As a result, the clock CK1 of the electrical signal is replaced with the clock CK2. Note that frequencies of the clocks CK1 and CK2 may be the same or different.

As such, according to the optical/electrical converting device of the second embodiment of the present invention, a clock of the electrical signal is replaced with a different clock using the FIFO. As a result, the optical/electrical converting device of the second embodiment of the present invention is effective in a case where it is desired to change a clock frequency, or in a case where it is desired to perform mapping with an accurate clock containing no noise component such as jitter while maintaining the same clock frequency.

### (third embodiment)

In the first and second embodiments, if the master data transmission apparatus is included in the optical data transmission system, the optical/electrical converting device 7 causes the first clock recovery unit 91 to recover a clock using an optical signal which is sequentially data transmitted based on an optical signal output from the master data transmission apparatus. Thus, in a third embodiment, the structure of the optical/electrical converting device 7 which directly receives a clock from the data transmission apparatus of the optical data transmission system will be described.

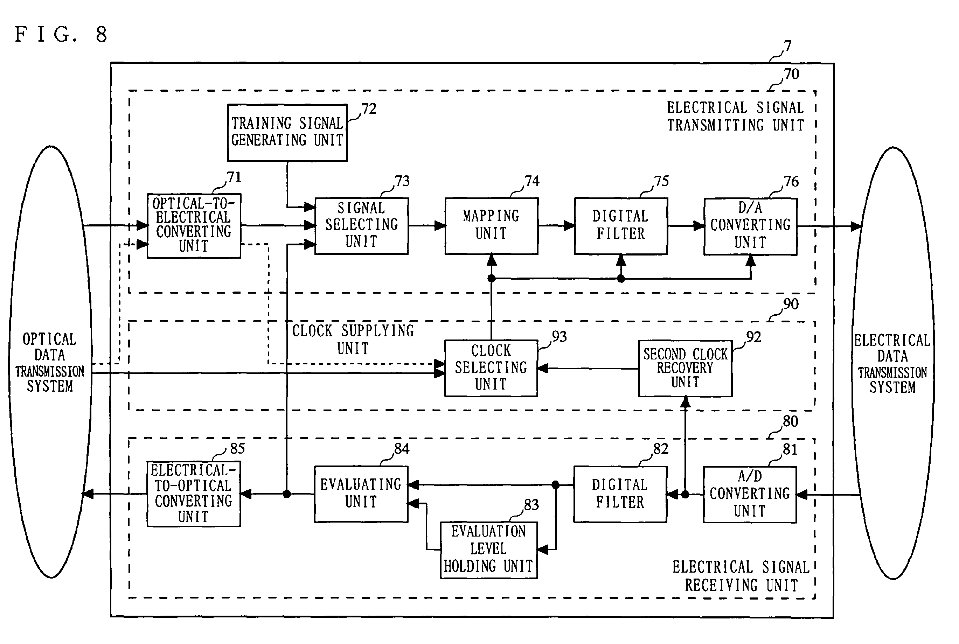

FIG. 8 is a block diagram showing the structure of the optical/electrical converting device 7 according to the third embodiment of the present invention. In FIG. 8, the optical/electrical converting device 7 includes the electrical signal transmitting unit 70, the electrical signal receiving unit 80, and the clock supplying unit 90. The clock supplying unit 90 includes the second clock recovery unit 92 and the clock selecting unit 93. The structures of the electrical signal transmitting unit 70 and the electrical signal receiving unit 80 are identical to those described in the first and second embodiments. As shown in FIG. 8, the optical/electrical converting device 7 according to the third embodiment differs from the first and second embodiments in that the first clock recovery unit 91 is removed.

In place of an output from the first clock recovery unit 91, a clock is directly supplied to the clock selecting unit 93 from the data transmission apparatus of the optical data transmission system. This directly supplied clock, which is only required to synchronize with the clock to which the PLL is locked in the master data transmission apparatus, may be supplied from the master data transmission apparatus or any of the slave data transmission apparatuses placed somewhere between the master data transmission apparatus and the optical/electrical converting device 7. In FIG. 8, in the case where a clock is supplied from the data transmission apparatus of the optical data transmission system using an electrical signal, the clock is directly supplied to the clock selecting unit 93 (shown by a solid line). On the other hand, in the case where a clock is supplied from the data transmission apparatus using an optical signal, the clock is converted from the optical signal into an electrical signal by the optical-to-electrical converting unit 71, and supplied to the clock selecting unit 93 (shown by a dashed line).

As such, according to the optical/electrical converting device of the third embodiment of the present invention, a clock is directly supplied from the data transmission apparatus of the optical data transmission system. As a result, the first clock recovery unit is not required, whereby the structure of the optical/electrical converting device can be simplified.

### (fourth embodiment)

In the first, second, and third embodiments, if the master data transmission apparatus is included in the optical data transmission system, the master data transmission apparatus generates a system clock. In a fourth embodiment, the structure of the optical/electrical converting device 7 which directly supplies a clock to the master data transmission apparatus of the optical data transmission system will be described.

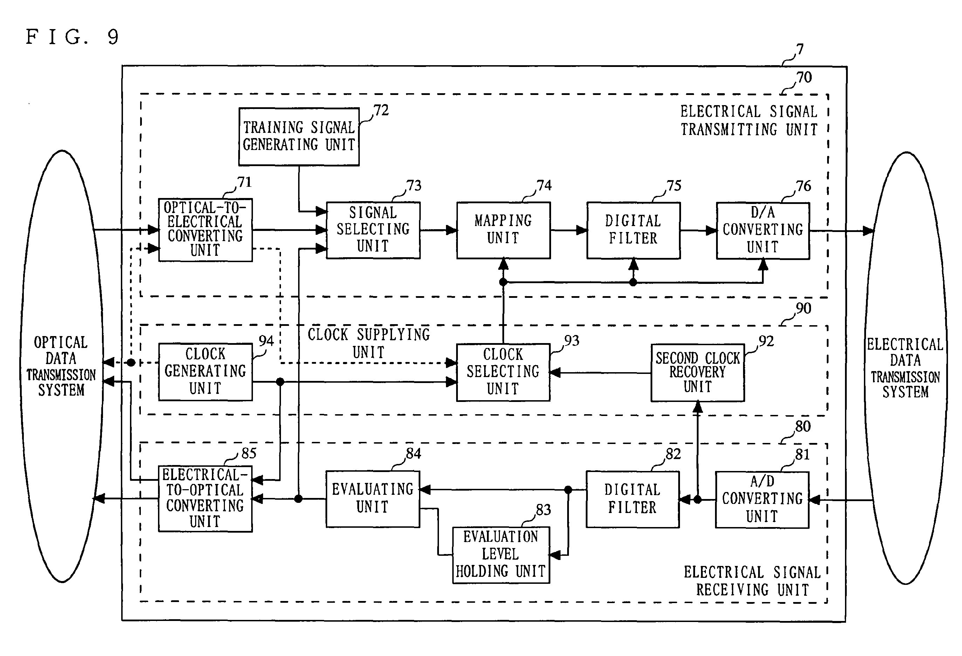

FIG. 9 is a block diagram showing the structure of the optical/electrical converting device 7 according to the fourth embodiment of the present invention. In FIG. 9, the optical/electrical converting device 7 includes the electrical signal transmitting unit 70, the electrical signal receiving unit 80, and the clock supplying unit 90. The clock supplying unit 90 includes a clock generating unit 94, the second clock recovery unit 92, and the clock selecting unit 93. The structures of the electrical signal transmitting unit 70 and the electrical signal receiving unit 80 are identical to those described in the first, second, and third embodiments. As shown in FIG. 9, the optical/electrical converting device 7 according to the fourth embodiment differs from the first, second, and third embodiments in that the first clock recovery unit 91 is replaced with the clock generating unit 94.

The clock generating unit 94 generates a reference system clock. This clock is supplied to the clock selecting unit 93, and also directly supplied to the master data transmission apparatus of the optical data transmission system. In FIG. 9, in the case where a clock is generated by the clock generating unit 94 using an electrical signal, the clock is directly supplied to the clock selecting unit 93, and the clock is also supplied to the master data transmission apparatus after it is converted from the electrical signal into an optical signal by the electrical-to-optical converting unit 85 (shown by a solid line). Also, in the case where a clock is generated by the clock generating unit 94 using an optical signal, the clock is supplied to the clock selecting unit 93 after it is converted from the optical signal into an electrical signal by the optical-to-electrical converting unit 71, and the clock is also directly supplied to the master data transmission apparatus (shown in dashed line).

As described above, according to the optical/electrical converting device of the fourth embodiment of the present invention, a clock is directly supplied to the master data transmission apparatus of the optical data transmission system. As a result, an oscillator of the master data transmission apparatus is not required, whereby the structure of the master data transmission apparatus can be simplified.

Note that, in the above embodiments, after the initialization process of the electrical data transmission system is completed, the initialization process of the optical data transmission system is performed by sequentially outputting an optical signal to each data transmission apparatus of the optical data transmission system. However, when the initialization of the electrical data transmission system is completed, the optical/electrical converting device 7 may output an electrical system initialization completion notification or a reset signal for optical devices to each data transmission apparatus of the optical data transmission system.

While the invention has been described in detail, the foregoing description is in all aspects illustrative and not restrictive. It is understood that numerous other modifications and variations can be devised without departing from the scope of the invention.

## Claims

1. An optical/electrical converting device for connecting an optical data transmission system, which is composed of apparatuses performing data communication by an optical signal, and an electrical data transmission system, which is composed of apparatuses performing data communication by an electrical signal, and performing data communication between the systems, the device comprising:
a clock supplying unit (90) for supplying a clock synchronized with a reference clock which is held by a master apparatus included in either system;
an electrical signal transmitting unit (70) for inputting a binary optical digital signal from the optical data transmission system, converting the optical signal into a multi-level electrical analog signal synchronized with the clock supplied from the clock supplying unit (90), and outputting the electrical signal to the electrical data transmission system; and
an electrical signal receiving unit (80) for inputting a multi-level electrical analog signal from the electrical data transmission system, converting the electrical signal into a binary optical digital signal synchronized with the clock supplied from the clock supplying unit (90), and outputting the optical signal to the optical data transmission system.

2. The optical/electrical converting device according to claim 1, wherein
the clock supplying unit (90) includes:
a first clock recovery unit (91) for recovering a clock based on an optical signal input from the optical data transmission system;
a second clock recovery unit (92) for recovering a clock based on an electrical signal input from the electrical data transmission system; and
a clock selecting unit (93) for selecting a clock recovered by the first clock recovery unit (91) if the master apparatus generating a reference clock is included in the optical data transmission system, and selecting a clock recovered by the second clock recovery unit (92) if the master apparatus generating a reference clock is included in the electrical data transmission system, and
the electrical signal transmitting unit (70) converts the optical signal input from the optical data transmission system into an electrical signal synchronized with the clock selected by the clock selecting unit (93).

3. The optical/electrical converting device according to claim 1, wherein
the clock supplying unit (90) includes:
a first clock recovery unit (91) for recovering a clock based on an optical signal input from the optical data transmission system;
a second clock recovery unit (92) for recovering a clock based on an electrical signal input from the electrical data transmission system; and
a clock selecting unit (93) for selecting a clock recovered by the first clock recovery unit (91) if the master apparatus generating a reference clock is included in the optical data transmission system, and selecting a clock recovered by the second clock recovery unit (92) if the master apparatus generating a reference clock is included in the electrical data transmission system, and
the electrical signal transmitting unit (70) converts the optical signal input from the optical data transmission system into an electrical signal, and replaces the clock recovered by the first clock recovery unit (91) with the clock selected by the clock selecting unit (93) while maintaining synchronization.

4. The optical/electrical converting device according to claim 1, wherein
the clock supplying unit (90) includes:
a clock recovery unit (92) for recovering a clock based on an electrical signal input from the electrical data transmission system; and
a clock selecting unit (93) for selecting a clock input from an apparatus, whose clock synchronization is already established, included in the optical data transmission system, if the master apparatus generating a reference clock is included in the optical data transmission system, and selecting a clock recovered by the clock recovery unit (92) if the master apparatus generating a reference clock is included in the electrical data transmission system, and
the electrical signal transmitting unit (70) converts an optical signal input from the optical data transmission system into an electrical signal synchronized with the clock selected by the clock selecting unit (93).

5. The optical/electrical converting device according to claim 1, wherein
the clock supplying unit (90) includes:
a clock recovery unit (92) for recovering a clock based on an electrical signal input from the electrical data transmission system;
a clock generating unit (94) for generating a reference clock to which the master apparatus is locked; and
a clock selecting unit (93) for selecting a clock generated by the clock generating unit (94) if the master apparatus locked by the reference clock is included in the optical data transmission system, and selecting a clock recovered by the clock recovery unit (92) if the master apparatus generating a reference clock is included in the electrical data transmission system, and
the electrical signal transmitting unit (70) converts an optical signal input from the optical data transmission system into an electrical signal synchronized with the clock selected by the clock selecting unit (93).

6. The optical/electrical converting device according to claim 2, wherein
the electrical signal receiving unit (80)
sends an electrical signal input from the electrical data transmission system to the electrical signal transmitting unit (70) until completion of initialization of the apparatuses composing the electrical data transmission system, and
after completion of the initialization of the apparatuses composing the electrical data transmission system, converts an electrical signal input from the electrical data transmission system into an optical signal synchronized with the clock selected by the clock selecting unit (93), and outputs the optical signal to the optical data transmission system.

7. The optical/electrical converting device according to claim 3, wherein
the electrical signal receiving unit (80)
sends an electrical signal input from the electrical data transmission system to the electrical signal transmitting unit (70) until completion of initialization of the apparatuses composing the electrical data transmission system, and
after completion of the initialization of the apparatuses composing the electrical data transmission system, converts an electrical signal input from the electrical data transmission system into an optical signal synchronized with the clock selected by the clock selecting unit (93), and outputs the optical signal to the optical data transmission system.

8. The optical/electrical converting device according to claim 4, wherein
the electrical signal receiving unit (80)
sends an electrical signal input from the electrical data transmission system to the electrical signal transmitting unit (70) until completion of initialization of the apparatuses composing the electrical data transmission system, and
after completion of the initialization of the apparatuses composing the electrical data transmission system, converts an electrical signal input from the electrical data transmission system into an optical signal synchronized with the clock selected by the clock selecting unit (93), and outputs the optical signal to the optical data transmission system.

9. The optical/electrical converting device according to claim 5, wherein
the electrical signal receiving unit (80)
sends an electrical signal input from the electrical data transmission system to the electrical signal transmitting unit (70) until completion of initialization of the apparatuses composing the electrical data transmission system, and
after completion of the initialization of the apparatuses composing the electrical data transmission system, converts an electrical signal input from the electrical data transmission system into an optical signal synchronized with the clock selected by the clock selecting unit (93), and outputs the optical signal to the optical data transmission system.

10. An optical/electrical converting method for connecting an optical data transmission system, which is composed of apparatuses performing data communication by an optical signal, and an electrical data transmission system, which is composed of apparatuses performing data communication by an electrical signal, and performing data communication between the systems, comprising the steps of:
recovering a clock based on an optical signal input from the optical data transmission system if a master apparatus generating a reference clock is included in the optical data transmission system;
recovering a clock based on an electrical signal input from the electrical data transmission system if a master apparatus generating a reference clock is included in the electrical data transmission system;
converting a binary optical digital signal input from the optical data transmission system into a multi-level electrical analogsignalsynchronized with the recovered clock,and outputting the electrical signal to the electrical data transmission system;
causing a multi-level electrical analog signal input from the electrical data transmission system to synchronize with the recovered clock, and outputting the electrical signal to the electrical data transmission system until completion of initialization of the apparatuses composing the electrical data transmission system; and
converting a multi-level electrical analog signal input from the electrical data transmission system into a binary optical digital signal synchronized with the recovered clock, and outputting the optical signal to the optical data transmission system after completion of the initialization of the apparatuses composing the electrical data transmission system.
